# FASCICULE DE BREVET EUROPEEN

(11) **EP 1 215 505 B1**
(45) Date de publication et mention de la délivrance du brevet: **28.12.2005**
(21) Numéro de dépôt: 00204605.0
(22) Date de dépôt: 18.12.2000
(51) Int. Cl.: G01S 1/02, H04B 17/00

(54) **Circuit de corrélation et de démodulation d'un récepteur de signaux modulés par un code spécifique**
Schaltung zur Korrelation und Demodulation eines Empfängers von Signalen moduliert mit einem spezifischen Kode
Circuit of correlation and demodulation of a receiver of signals modulated by a specific code

(43) Date de publication de la demande: 19.06.2002
(73) Titulaire: ASULAB S.A., CH-2501 Bienne (CH)
(72) Inventeur: Farine, Pierre-André, 2000 Neuchâtel (CH); Etienne, Jean-Daniel, 2206 Les Geneveys-sur-Coffrane (CH); Riem-Vis, Ruud, 2000 Neuchâtel (CH); Firouzi, Elham, 2514 Ligerz (CH)
(74) Mandataire: Laurent, Jean

(56) Documents cités:
- US-A- 4 100 531
- US-A- 5 093 800

## Description

L'invention concerne un circuit de corrélation et de démodulation d'un récepteur de signaux modulés par un premier code d'une longueur de répétition déterminée, ledit premier code définissant une source émettrice desdits signaux. Ce circuit comprend un étage de corrélation relié à des moyens de commande notamment pour configurer ledit étage de corrélation en mode de fonctionnement normal ou en mode de test. Dans un mode de fonctionnement normal, ledit étage est destiné à recevoir des signaux intermédiaires correspondant aux signaux modulés mis en forme dans des moyens de réception des signaux modulés du récepteur. Les signaux intermédiaires sont ensuite corrélés dans une boucle d'asservissement d'un corrélateur dudit étage de corrélation avec une réplique du premier code fournie par un générateur de code.

Les signaux modulés notamment à fréquence porteuse, qui sont émis par une ou plusieurs sources émettrices, comprennent habituellement des messages qu'il s'agit de démoduler dans le circuit de corrélation et de démodulation. Le code qui module lesdits signaux pour définir la source émettrice est habituellement un code pseudo-aléatoire. Ce code de longueur de répétition déterminée est unique pour chaque source émettrice de manière à pouvoir reconnaître de quelle source émettrice proviennent les signaux que le récepteur reçoit. Il peut s'agir par exemple de signaux dans le domaine des télécommunications ou de signaux de positionnement à l'aide de satellites, tels que des signaux du type GPS.

Dans le cas de récepteurs GPS, les signaux radiofréquences sont émis par plusieurs satellites placés en orbite qui sont identifiés l'un de l'autre par un code pseudo-aléatoire spécifique, dit code de Gold, modulé sur les signaux à fréquence porteuse. Le code de Gold est un signal numérique qui est composé de 1023 chips et qui se répète toutes les millisecondes. Les chips prennent des valeurs 1 ou 0 comme pour un bit. Tous les codes de Gold ont la caractéristique d'être orthogonaux ce qui a pour conséquence qu'en les corrélant l'un avec l'autre le résultat de la corrélation donne une valeur proche de 0. Cette caractéristique permet de pouvoir indépendamment traiter plusieurs signaux radiofréquences provenant de plusieurs satellites de façon simultanée par exemple dans plusieurs canaux de corrélation d'un même récepteur.

Les signaux GPS fournissent à un récepteur des données de positionnement et temporelles pour des opérations de calculs de la position en X, Y et Z, de la vitesse et de l'heure universelle. Toutefois pour la détermination de la position et du temps, il est nécessaire que le récepteur obtiennent des données provenant d'au moins quatre satellites visibles.

Dans divers domaines d'utilisation de récepteurs de signaux modulés par des codes spécifiques, tels que des signaux radiofréquences, il est nécessaire de s'assurer du bon fonctionnement des parties du récepteur qui permettent notamment de tirer les messages des signaux reçus. Des tests de fonctionnement desdites parties du récepteur peuvent être réalisés soit avant ou après leur montage. Bien entendu, lesdites parties du récepteur ont dû déjà passer plusieurs étapes préliminaires de tests élémentaires avant de pouvoir contrôler leur fonctionnalité de manière générale.

Lors d'une utilisation d'un récepteur GPS, un test fonctionnel dudit récepteur doit être réalisé dans des conditions proches de la réalité pour s'assurer du bon fonctionnement de chaque canal d'un étage de corrélation. Si ce test fonctionnel est réussi, cela permet de garantir à l'utilisateur du récepteur la validité des calculs de position, de vitesse et du temps par exemple.

A titre d'exemple notamment dans le domaine des télécommunications, le brevet US 4,100,531 décrit des moyens de mesure du taux d'erreur de bits d'un équipement numérique, tel qu'un dispositif de transmission de données. Cet équipement est testé à l'aide de signaux de test à code pseudo-aléatoire (PRN code) fourni par un émetteur et reçu par un récepteur à tester. Le récepteur testé génère une réplique du code PRN à corréler dans un étage de corrélation avec les signaux modulés par le code PRN de longueur déterminée.

Un inconvénient de cet équipement est que les signaux de test codés sont envoyés par un émetteur externe à destination du récepteur afin d'être testé, ce qui ne permet pas de réduire de manière significative le temps de test. De plus, un autre inconvénient est que les signaux émis doivent être à l'image des signaux réels de communication pour représenter un test représentatif de fonctionnement du récepteur. Ceci implique inévitablement d'avoir un bruit additionnel sur les signaux de test, ce qui est souvent difficile à produire.

Dans le domaine des récepteurs de type GPS, le brevet US 5,093,800 décrit un appareil de test capable de générer des signaux radiofréquences de type GPS. Ces signaux GPS produits par l'appareil sont destinés à être reçus par un récepteur GPS à tester. Pour ce faire, l'appareil comprend également des données relatives aux satellites de manière à pouvoir générer et transmettre au récepteur des signaux correspondants aux signaux codés émis par plusieurs satellites.

Un inconvénient relevé avec cet appareil de test réside dans le fait que pour pouvoir vérifier le bon fonctionnement notamment de l'étage de corrélation du récepteur, les signaux de test sont des signaux radiofréquences équivalents à des signaux radiofréquences émis par des satellites. Ceci implique évidemment de générer un bruit additionnel avec les signaux radiofréquences générés dans l'appareil afin de contrôler le bon fonctionnement de l'étage de corrélation. De plus, un autre inconvénient est que le temps de test de fonctionnalité du récepteur est relativement long car il est dépendant de la longueur de répétition du code pseudo-aléatoire, c'est-à-dire du code de Gold. Si le récepteur est monté dans un dispositif alimenté par une batterie ou un accumulateur, le temps de test long peut également décharger inutilement ladite batterie ou ledit accumulateur.

Un but que se propose de résoudre l'objet de l'invention consiste à réaliser un circuit de corrélation et de démodulation d'un récepteur de signaux modulés par un code susceptible de réduire au maximum le temps du test représentatif de fonctionnement dudit circuit en palliant les inconvénients des dispositifs ou procédés de test de l'art antérieur. De plus en effectuant un test fonctionnel dudit circuit, il peut être tenu compte de paramètres liés au bruit des signaux reçus.

Ce but, ainsi que d'autres sont atteints par le circuit de corrélation et de démodulation décrit ci-devant qui se caractérise en ce qu'en phase de test, ledit générateur de code est adapté par l'intermédiaire des moyens de commande pour générer une réplique d'un second code de longueur de répétition inférieure au premier code pour des opérations de corrélation avec des signaux intermédiaires de test modulés par le second code de longueur de répétition inférieure au premier code et fournis à l'étage de corrélation de manière à opérer un test représentatif de fonctionnement en boucle fermée de l'étage de corrélation plus rapidement qu'avec des signaux modulés par le premier code.

Un avantage du circuit de corrélation et de démodulation est que le temps du test en boucle fermée de l'étage de corrélation est fortement réduit. Ceci permet de pouvoir rapidement connaître l'état de fonctionnement dudit circuit, donc du récepteur qui le contient.

Dans le cas d'un récepteur de signaux radiofréquences du type GPS, le temps de test du circuit de corrélation et de démodulation peut être relativement long si la longueur de répétition du code pseudo-aléatoire est équivalente au code de Gold. De plus, ce temps de test est également long si ledit circuit comprend plusieurs canaux de corrélation dans l'étage de corrélation. C'est pourquoi les signaux intermédiaires de test sont fournis à l'étage de corrélation du circuit avec un code pseudo-aléatoire de longueur réduite pour un contrôle rapide de fonctionnalité du circuit.

Comme les signaux radiofréquences comprennent également du bruit, la longueur du code pseudo-aléatoire réduit peut être définie de manière à tenir compte de ce bruit. Les signaux de test à code réduit, qui sont générés sans bruit, permettent de fournir des signaux de sortie d'intégrateurs compteurs de l'étage de corrélation dont leur puissance est proche de la puissance de signaux réels de sortie qui comprennent du bruit. De préférence, la longueur de répétition du code pseudo-aléatoire des signaux de test est de 31 chips, alors que celle du code de Gold est de 1023 chips.

Ces signaux intermédiaires de test peuvent être générés à l'extérieur du circuit de corrélation et de démodulation ou de préférence à l'intérieur du circuit par des moyens de génération de signaux de test intégrés. Ces moyens de génération de signaux de test ne prennent que peu de place dans le circuit de corrélation et de démodulation, car ils ne sont constitués que d'une quarantaine de portes logiques ou flip-flop, alors que le circuit compte près de 2 millions de transistors. Ces moyens de génération de signaux de test sont enclenchés par les moyens de commande, c'est-à-dire par les moyens à microprocesseur.

Avantageusement, lesdits moyens de génération de signaux de test peuvent être enclenchés par périodes de temps programmées dans les moyens à microprocesseur. L'enclenchement desdits moyens de génération de signaux de test permet, lorsque ledit circuit est monté dans le récepteur complet, d'empêcher la fourniture des signaux intermédiaires par les moyens de réception du récepteur audit circuit. Ainsi, le circuit ne reçoit en phase de test que les signaux intermédiaires de test provenant des moyens de génération de signaux de test.

Ces signaux de test sont imposés identiquement dans tous les canaux de l'étage de corrélation pour un test simultané des canaux. Le microprocesseur commande le générateur de code de chaque canal, afin qu'il génère une réplique du code pseudo-aléatoire réduit pour chaque canal en phase de test.

Il est à noter qu'aucun signal de test n'est fourni depuis l'extérieur du récepteur complet. Par contre, des signaux de test de contrôle de fonctionnalité sans bruit sont préférablement appliqués en lieu et place des signaux intermédiaires traditionnels au niveau du circuit de corrélation et de démodulation.

La réduction du temps de test du circuit de corrélation et de démodulation est en principe nécessaire lorsque le circuit est monté dans un récepteur de signaux modulés afin d'opérer rapidement une phase de test. Cette réduction du temps de test peut éviter de consommer trop d'énergie d'un accumulateur ou d'une batterie d'alimentation si le récepteur est monté dans un objet portable, tel qu'une montre ou un téléphone. Toutefois, le circuit de corrélation et de démodulation peut être testé également avant son montage dans le récepteur avec des signaux de test en principe sans bruit fournis à l'étage de corrélation correspondant à des signaux intermédiaires traditionnels.

Un utilisateur peut également de sa propre initiative imposer à tout moment un test complet du circuit de corrélation et de démodulation du récepteur.

Les buts, avantages et caractéristiques du circuit de corrélation et de démodulation apparaîtront mieux dans la description suivante de formes d'exécution illustrées par les dessins sur lesquels :
- la figure 1 représente schématiquement un récepteur de signaux radiofréquences avec un circuit de corrélation et de démodulation selon l'invention,
- la figure 2 représente schématiquement les éléments électroniques du générateur de signaux de test du circuit selon l'invention,
- la figure 3a représente un générateur de code PRN réduit des moyens de génération des signaux de tests du circuit selon l'invention,
- la figure 3b représente un générateur de code PRN configurable en mode de fonctionnement normal et en mode de test de chaque canal de l'étage de corrélation du circuit selon l'invention, et
- la figure 4 représente schématiquement les éléments d'un corrélateur de l'étage de corrélation du circuit selon l'invention.

Dans la description suivante, les formes d'exécution du circuit de corrélation et de démodulation seront expliquées en référence à un récepteur de signaux radiofréquences du type GPS. Il est à noter que plusieurs éléments du récepteur connus d'un homme du métier dans ce domaine technique ne seront pas expliqués d'une manière détaillée dans ladite description.

Dans ce type de récepteur GPS, les signaux radiofréquences reçus, qui sont modulés par un code pseudo-aléatoire, dit code de Gold, comprennent en plus des messages à démoduler par le circuit de corrélation et de démodulation. Les messages d'au moins quatre satellites permettent ainsi à des moyens à microprocesseur du circuit de calculer notamment la position en X, Y et Z, la vitesse du récepteur et/ou le temps. Cependant, l'utilisation d'un tel circuit de corrélation et de démodulation peut également être envisagée dans d'autres types de récepteurs de signaux modulés par un code de longueur de répétition déterminée. Par exemple, le circuit de corrélation et de démodulation peut être utilisé dans un récepteur de télécommunications, ou dans un récepteur de mesure qui utilisent des signaux de lumière portant un code déterminé ou dans d'autres domaines.

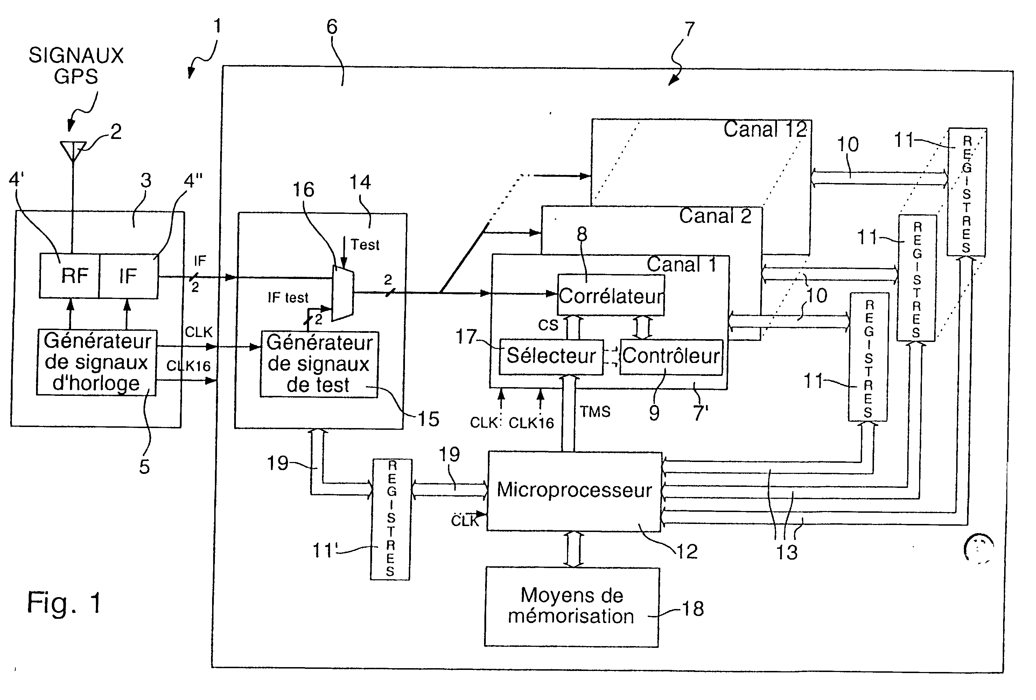

Le récepteur de type GPS avec le circuit de corrélation et de démodulation est représenté schématiquement à la figure 1. Il se compose d'une antenne 2 pour recevoir des signaux radiofréquences GPS provenant de plusieurs satellites, de moyens de réception et de mise en forme des signaux radiofréquences 3 fournis par l'antenne 2, et d'un circuit de corrélation et de démodulation 6 recevant des signaux intermédiaires IF sous forme complexe à une fréquence de l'ordre de 400 kHz des moyens de réception 3.

Dans les moyens de réception 3, un premier circuit électronique 4' convertit tout d'abord les signaux radiofréquences de fréquence 1,57542 GHz en une fréquence par exemple de 179 MHz. Un second circuit électronique IF 4" procède à une double conversion pour amener les signaux GPS tout d'abord à une fréquence de 4,76 MHz puis finalement à une fréquence de 400 kHz en échantillonnant à 4,36 MHz. Des signaux intermédiaires complexes IF échantillonnés et quantifiés à fréquence de l'ordre de 400 kHz sont ainsi fournis au circuit de corrélation et de démodulation. Les signaux intermédiaires complexes IF sont donc composés d'un signal en phase I et d'un signal en quadrature Q représentés sur la figure par une ligne en gras coupée d'une barre oblique définissant 2 bits. Toutefois, ces signaux intermédiaires IF pourraient être définis sur 4 bits si une conversion 2-bit dans un étage précédent était opérée, ou 2n bits (n entier plus grand que 1).

Pour les opérations de conversion de fréquence, un générateur de signaux d'horloge 5 fait partie des moyens de réception et de mise en forme des signaux radiofréquences 3. Ce générateur est muni par exemple d'un oscillateur à quartz non représenté calibré à une fréquence de l'ordre de 17,6 MHz. Deux signaux d'horloge CLK et CLK16 sont fournis au circuit de corrélation et de démodulation pour cadencer toutes les opérations de ce circuit. La première fréquence d'horloge CLK peut valoir 4,36 MHz, tandis que la seconde fréquence d'horloge peut être fixée 16 fois inférieure, c'est-à-dire à 272,5 kHz utilisée pour une grande partie de l'étage de corrélation afin de gagner en consommation d'énergie.

Il est à noter que les signaux fournis par le premier circuit 4' donnent par exemple dans la moitié des cas des signaux de parité différente (+1 et -1) avec 2 bits de sortie ou (+3; +1; -1; -3) avec 4 bits de sortie. Il doit donc être tenu compte de cette parité pour les opérations de démodulation des signaux GPS dans le récepteur.

Ledit circuit de corrélation et de démodulation 6 comprend un étage de corrélation 7 constitué de 12 canaux 7', un bus de transfert de données 10 reliant chaque canal à un registre tampon 11 respectif, et un bus de données 13 reliant chaque registre tampon à des moyens à microprocesseur 12. Des moyens de mémorisation 18 reliés au microprocesseur font partie des moyens à microprocesseur 12 afin de stocker par exemple des données relatives à chaque satellite placé en orbite et des données de paramètres de fréquence porteuse et de code pseudo-aléatoire de chaque satellite. Tous les éléments composant le circuit de corrélation et de démodulation peuvent être réalisés sur un unique substrat semi-conducteur, tel qu'un substrat en silicium.

A l'entrée du circuit de corrélation et de démodulation 6 sont placés des moyens de générations de signaux de test 14 qui comprennent un générateur de signaux de test 15 et un multiplexeur 16. Le multiplexeur 16 des moyens de génération de signaux de test 14 reçoit à une entrée les signaux intermédiaires IF fournis par les moyens de réception 3 et à une autre entrée les signaux intermédiaires de test IFₜₑₛₜ. Ledit multiplexeur 16 est commandé par un signal de commande Test fourni par des moyens de commande intégrés dans les moyens à microprocesseur 12 à travers des bus de commandes 19 et un registre tampon 11'. Le multiplexeur 16 pourrait également être intégré dans le générateur de signaux de test 15 au besoin.

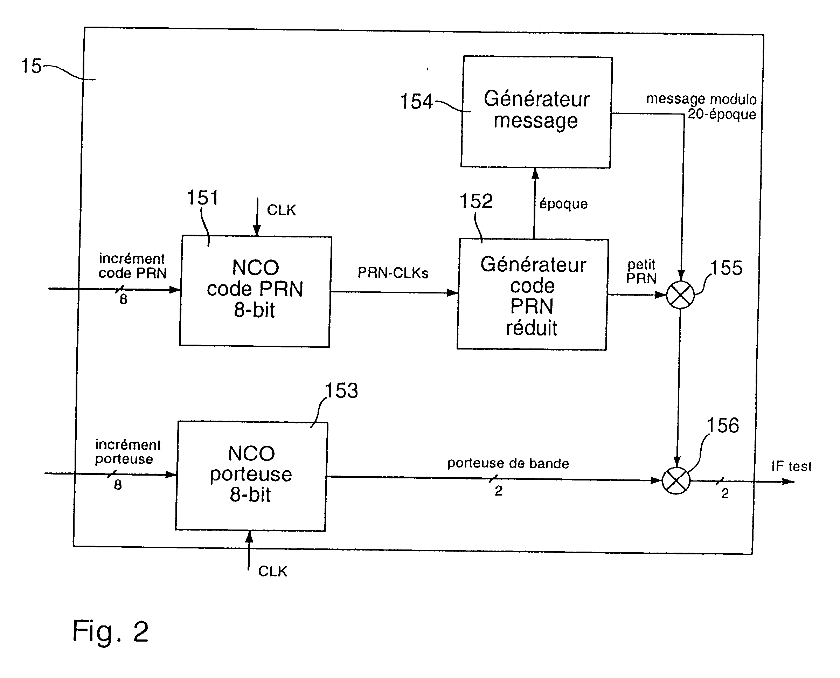

En fonctionnement normal sans signal de commande Test, les signaux intermédiaires IF représentatifs des signaux radiofréquences émis par plusieurs satellites sont transmis par le multiplexeur 16 à l'étage de corrélation 7 pour tous les canaux 7'. Certains canaux sont configurés différemment en fonctionnement normal par l'intermédiaire du microprocesseur 12 pour qu'ils cherchent chacun un satellite visible à l'aide des signaux intermédiaires IF afin de démoduler les messages GPS reçus. Par contre, lorsque le microprocesseur 12 commande une phase de test, il envoie des signaux de commande de test notamment aux moyens de générations de signaux de test 14 via les bus de commandes 19. Dans cette phase de test, le générateur de signaux de test 15 est donc enclenché, et le multiplexeur 16 recevant le signal Test ne transmet que les signaux intermédiaires de test IFₜₑₛₜ produits par le générateur 15 à l'étage de corrélation 7. Ledit générateur de signaux de test sera expliqué de manière plus détaillée en référence à la figure 2.

Une fois enclenché, le générateur de signaux de test 15 génère des signaux intermédiaires de test IFₜₑₛₜ en lieu et place des signaux intermédiaires traditionnels pour opérer un test représentatif de l'étage de corrélation en boucle fermée. Ces signaux de test IFₜₑₛₜ sont modulés avec un code pseudo-aléatoire de longueur de répétition inférieure au code de Gold afin de réaliser un test en boucle fermée plus rapidement. De préférence, la longueur de répétition du code pseudo-aléatoire réduit est de 31 chips, c'est-à-dire 2⁵-1, alors que le code de Gold est d'une longueur de répétition de 1023 chips, c'est-à-dire 2¹⁰-1.

Dans les 1023 chips, près de 1000 chips, en proportion, peuvent être considérés comme équivalent au bruit des signaux radiofréquences. Par conséquent, il a été choisi un code réduit de 31 chips afin de pouvoir fournir des signaux intermédiaires de test sans bruit pour un test représentatif de l'étage de corrélation.

Bien entendu, pour d'autres domaines d'utilisation du circuit de corrélation et de démodulation, la longueur de répétition du second code pseudo-aléatoire réduit peut être de 2^{(n-m)}-1, alors que la longueur de répétition du premier code pseudo-aléatoire des signaux reçus est de 2ⁿ-1. Les nombres n et m sont des nombres entiers avec n plus grand que 3 et m prenant une valeur déterminée entre 1 et n-1.

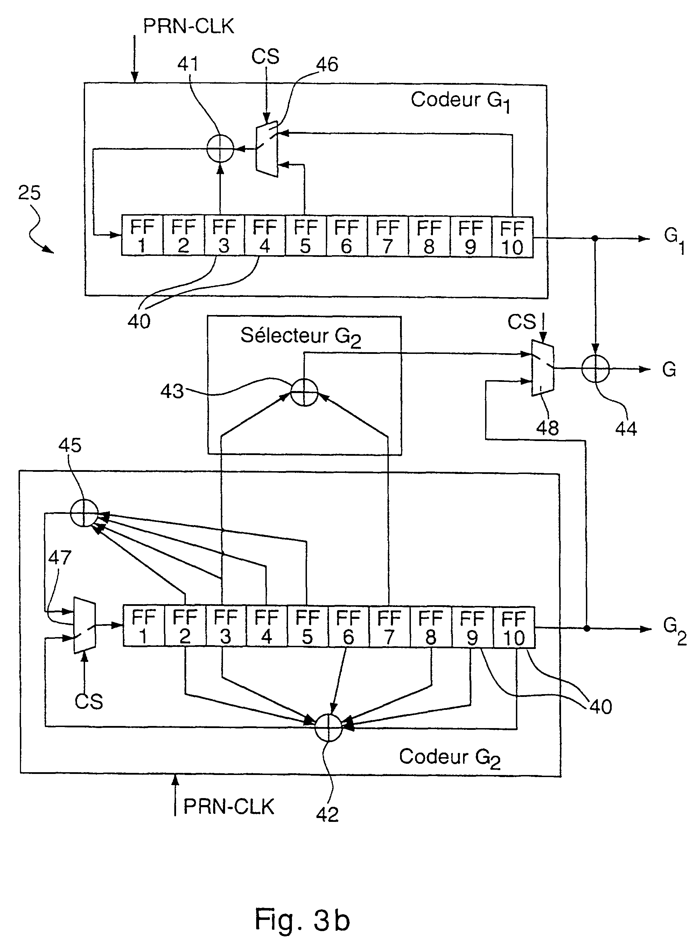

En phase de test le microprocesseur 12 envoie des signaux de commande de test TMS vers des sélecteurs de test 17 placés chacun dans un canal 7' respectif. Chaque canal 7' comprend un corrélateur 8 recevant les signaux IF ou IFₜₑₛₜ et de préférence un contrôleur 9 destiné à mettre en fonction par un matériel dédicacé notamment un algorithme de traitement des signaux pour l'acquisition du signal d'un satellite et la poursuite dudit satellite détecté par le canal. Les sélecteurs de test 17 reliés chacun à un corrélateur 8 respectif ont pour tâche de fournir des commandes CS audit corrélateur pour configurer notamment un générateur de code pseudo-aléatoire, qui sera expliqué de manière plus détaillée en référence à la figure 3b.

En fonctionnement normal, aucune commande CS n'est transmise par le sélecteur 17 vers le corrélateur 8, ce qui fait que le générateur de code est destiné à générer une réplique de code de longueur de répétition équivalente au code de Gold. En phase de test par contre sur commande du microprocesseur 12, le sélecteur 17 envoie des commandes CS pour configurer le générateur de code afin qu'il génère une réplique d'un code pseudo-aléatoire de longueur de répétition inférieure au code de Gold. Ce code pseudo-aléatoire réduit doit être une réplique du code pseudo-aléatoire modulé sur les signaux intermédiaires de test en phase de test.

Les signaux de commande TMS sont en principe définis comme un mot de commande à deux bits pour un fonctionnement normal ou divers modes de test. Si TMS vaut 00 en binaire, alors aucune commande CS de test n'est transmis pour un fonctionnement normal. Si TMS vaut 11 en binaire, le mode de test en boucle fermée est imposé pour contrôler le bon fonctionnement de tous les canaux 7' de l'étage de corrélation 7 avec les signaux intermédiaires de test IFₜₑₛₜ introduits à l'entrée. Si TMS vaut 01 en binaire, un test du module corrélateur 8 de chaque canal peut être entrepris grâce à un générateur de vecteurs de test non représenté commandé par le microprocesseur 12. Si TMS vaut 10 en binaire, un test du module contrôleur 9 de chaque canal peut être entrepris grâce au générateur de vecteurs de test. Dans la présente invention, les signaux TMS prennent de préférence les valeurs 00 ou 11.

Dans une variante de réalisation non représentée, tous les sélecteurs 17 pourraient faire partie des moyens à microprocesseur 12. De même, les commandes CS pour chaque corrélateur 8 pourraient transiter par les bus 10 et 13.

En même temps que le sélecteur 17 envoie des commandes CS, le microprocesseur 12 transmet via les bus 13 et 10 des paramètres relatifs au code pseudo-aléatoire à chercher, et à la fréquence porteuse des signaux intermédiaires de test. Ces paramètres sont transmis pour configurer tous les canaux 7' en phase de test comme cela se fait également en fonctionnement normal, mais de manière individuelle pour chaque canal. Toutefois en phase de test, les paramètres sont les mêmes pour tous les canaux afin que les signaux intermédiaires de test IFₜₑₛₜ à unique code pseudo-aléatoire réduit soient traités dans tous les canaux simultanément et de manière identique.

Comme indiqué ci-dessus en fonctionnement normal, les registres 11 de chaque canal sont susceptibles de recevoir des données ou des paramètres de configuration provenant du microprocesseur 12 et des moyens de mémorisation 18 qui lui sont associés pour chaque canal de corrélation 7'. Par les registres 11, des données concernant les messages GPS, l'état du code PRN, l'incrément de fréquence relatif à l'effet Doppler, les pseudo-distances et autres données peuvent être transmises vers le microprocesseur 12 après la corrélation et le verrouillage sur un satellite spécifique..

En phase de test, lesdits registres 11 reçoivent les résultats du test en boucle fermée, ainsi que les messages à traiter par le microprocesseur. Le microprocesseur peut donc contrôler à la suite du test si tous les canaux de corrélation fonctionnent correctement indépendamment de l'extérieur avant de remettre le circuit de corrélation et de démodulation en fonctionnement normal.

Il est à noter encore que ces registres 11 peuvent accumuler des données pendant la phase de corrélation qui seront utilisées pendant les procédures d'acquisition et de poursuite des satellites sans forcément être transférées automatiquement au microprocesseur 12.

Dans une variante de réalisation, un unique bloc de registres 11 peut être envisagé pour tous les canaux 7' de l'étage de corrélation, étant donné que certaines données placées dans le bloc de registres sont communes à chaque canal.

Etant donné que chaque canal 7' comprend un contrôleur 9 pour toutes les phases d'acquisition et de poursuite des satellites, le microprocesseur 12 peut être de dimension réduite. Ce microprocesseur 12 peut être par exemple un microprocesseur 8-bit CooIRISC-816 de EM Microelectronic-Marin SA en Suisse. Toutefois, un microprocesseur de plus grande dimension, par exemple un microprocesseur 32-bit, pourrait être utilisé pour éviter de placer un contrôleur 9 dans chaque canal. Ce microprocesseur de plus grande taille devrait dans ce cas s'occuper de toutes les tâches des procédures d'acquisition et de poursuite des satellites en fonctionnement normal et en phase de test selon l'invention.

La figure 2 montre schématiquement les différents blocs constituant le générateur de signaux de test 15. Ce générateur de signaux de test est enclenché sur commande du microprocesseur comme expliqué précédemment. Dès qu'il est enclenché, il produit des signaux intermédiaires de test IFₜₑₛₜ destinés à être introduits dans l'étage de corrélation à tester en boucle fermée. Les signaux intermédiaires de test IFₜₑₛₜ sans bruit doivent être conçus de manière équivalente aux signaux intermédiaires tirés des signaux radiofréquences mis en forme dans le récepteur. Toutefois, les signaux intermédiaires de test ou signaux de substitution doivent être modulés avec un code pseudo-aléatoire de longueur inférieure au code de Gold afin de réduire le temps de test de l'étage de corrélation.

Le générateur de signaux de test 15 comprend un oscillateur 8-bit à commande numérique (NCO) 151 pour le code cadencé par les signaux d'horloge CLK, un petit générateur de code PRN 152, un générateur de message 154, un oscillateur 8-bit à commande numérique (NCO) 153 pour la porteuse cadencé par les signaux d'horloge CLK et deux mélangeurs de signaux 155 et 156. Les deux oscillateurs 8-bit 151 et 153 ont une résolution de fréquence de l'ordre de 17 kHz qui est définie par la fréquence d'horloge CLK de 4,36 MHz divisée par 2⁸.

En phase de test, les deux oscillateurs 8-bit à commande numérique 151 et 153 reçoivent chacun un mot binaire à 8 bits du microprocesseur. Le premier oscillateur 151 reçoit un incrément de code pour produire un signal d'horloge PRN-CLKs pour cadencer le petit générateur de code PRN 152 qui suit. Le second oscillateur 153 reçoit un incrément de fréquence porteuse pour produire des signaux de porteuse, dont un signal est en phase et un autre signal est en quadrature. La valeur de la fréquence porteuse n'a pas une grande importance pour le test en boucle fermée de l'étage de corrélation. De ce fait, cette fréquence porteuse peut prendre une valeur de 400 kHz comme les signaux intermédiaires traditionnels, ou une valeur inférieure.

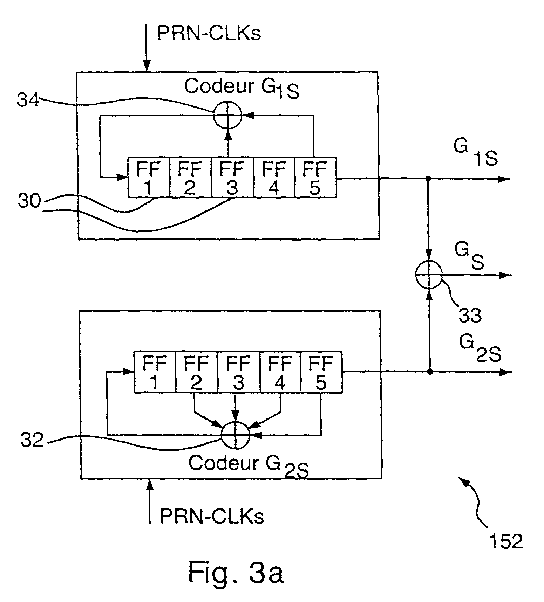

Le petit générateur de code PRN 152, montré de manière plus détaillée à la figure 3a, reçoit le signal d'horloge PRN-CLKs de l'oscillateur 151 afin de produire un code pseudo-aléatoire de longueur de répétition réduite. La longueur de répétition de ce code est de préférence de 31, c'est-à-dire 2⁵-1 comme expliqué ci-dessus.

La fréquence du signal d'horloge PRN-CLKs est fonction de l'incrément de code introduit à l'entrée de l'oscillateur à commande numérique 151. Si l'incrément de code est fixé à une valeur de 24, ce qui donne 11000 en binaire, la fréquence d'horloge PRN-CLKs vaut 24 fois 17 kHz, c'est-à-dire 408 kHz. L'incrément de code pourrait évidemment être fixé plus élevé de manière à s'approcher de la fréquence de 1,023 MHz pour un générateur de code de l'étage de corrélation en fonctionnement normal. Cependant, la valeur de 408 kHz de la fréquence PRN-CLKs a été choisie afin de permettre de s'approcher en phase de test du traitement réel dudit étage de corrélation en fonctionnement normal.

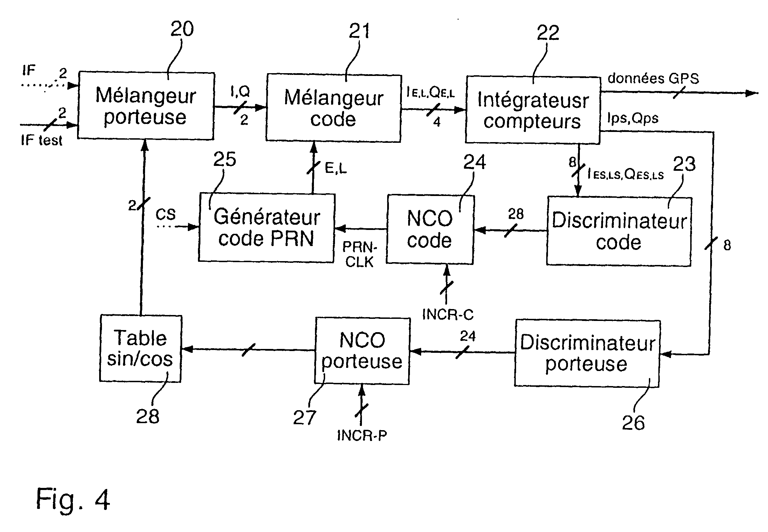

Les signaux de sortie de l'étage de corrélation, comme expliqué en référence à la figure 4, doivent être équivalents que ce soit des signaux intermédiaires traditionnels, qui comprennent un bruit environ de 16 dB supérieur aux signaux utiles, ou des signaux intermédiaires de test sans bruit fournis à l'entrée de l'étage de corrélation. Le but est de tenir compte du bruit inhérent aux signaux radiofréquences pour faire un test rapide proche de la réalité de l'étage de corrélation avec les signaux de test sans bruit.

Afin de fournir des signaux intermédiaires de test à l'image de signaux intermédiaire traditionnels, il est nécessaire de placer un message à fréquence de 50 Hz sur les signaux à fréquence porteuse. Ceci permet au microprocesseur de contrôler en fin de test que chaque canal à réussi à démoduler le bon message. Pour ce faire, un générateur de message 154 est cadencé par un signal d'époque (1 ms) pour donner un message à 50 Hz (modulo 20-époque).

Le message du générateur de message 154 et le code PRN réduit du petit générateur PRN 152 sont mélangés dans le mélangeur 155. La sortie de ce mélangeur 155 est également mélangée ou modulée sur la porteuse de boucle dans le mélangeur 156 pour produire les signaux intermédiaires de test IFₜₑₛₜ.

La figure 3a montre de manière plus détaillée le petit générateur de code pseudo-aléatoire 152, dont la structure est bien connue d'un homme du métier dans ce domaine technique. Comme il doit produire une longueur de code de 31, il comprend dans un codeur G_{1S} et dans un codeur G_{2S} une série de cinq bascules 30 (flip-flop) définies par le symbole FF et le numéro de chaque bascule. Un transfert de l'état de chaque bascule 30 est produit de la bascule FF1 à la bascule FF5 à chaque coup d'horloge PRN-CLKs.

Dans le premier codeur G_{1S}, les bascules 30 FF3 et FF5 ont chacune une sortie additionnée dans l'additionneur 34 de type EX-OR. La sortie de l'additionneur 34 est introduite dans la bascule FF1 afin de produire un premier signal codé G_{1S} à la sortie de la dernière bascule FF5 à chaque coup d'horloge PRN-CLKs.

Dans le second codeur G_{2S}, les bascules 30 FF2 à FF5 ont chacune une sortie additionnée dans l'additionneur 32 de type EX-OR. La sortie de l'additionneur 32 est introduite dans la bascule FF1 afin de produire un second signal codé G_{2S} à la sortie de la dernière bascule FF5 à chaque coup d'horloge PRN-CLKs.

Les premier et second signaux codés G_{1S} et G_{2S} sont également additionnés dans un additionneur 33 de type EX-OR afin de produire le signal codé Gs qui correspond au signal de sortie du petit générateur de code PRN 152.

La figure 3b montre un générateur de code pseudo-aléatoire traditionnel 25 utilisé dans chaque corrélateur de l'étage de corrélation. La structure de ce générateur est bien connue d'un homme du métier dans ce domaine technique dans le but de produire une réplique du code de Gold en fonctionnement normal. Cependant, ce générateur de code 25 comprend en plus des multiplexeurs 46 à 48 afin de pouvoir configurer ledit générateur également en phase de test. En phase de test, ce générateur de code 25 doit être configuré pour produire une réplique du code pseudo-aléatoire généré dans le générateur de signaux de test, c'est-à-dire un code de longueur de répétition valant 31 (2⁵-1).

Le générateur de code pseudo-aléatoire 25 comprend un premier codeur G₁ dans lequel dix bascules 40 (flip-flop), définies par le symbole FF et le numéro de chaque bascule, sont placées en série, un second codeur G₂ dans lequel également dix bascules sont placées en série, et un sélecteur G₂ à décalage dans le temps pour définir le code spécifique d'un satellite. En fonctionnement normal, les bascules FF3 et FF10 du codeur G₁ ont chacune une sortie additionnée dans l'additionneur 41 de type EX-OR. Le signal de sortie de la bascule FF10 passe librement (montré en pointillés sur la figure) par le multiplexeur 46 si aucune commande CS n'est imposée audit multiplexeur 46. La sortie de l'additionneur 41 est introduite à l'entrée de la bascule 40 FF1 afin de produire un premier signal codé G₁ à la sortie de la dernière bascule FF10 à chaque coup d'horloge PRN-CLK. Ce signal d'horloge PRN-CLK vaut en fonctionnement normal environ 1,023 MHz, alors qu'en phase de test il doit valoir environ 408 kHz en fonction des signaux intermédiaires de test.

En phase de test, une commande CS est imposée au multiplexeur 46 afin qu'uniquement les sorties des bascules 40 FF3 et FF5 soient additionnées dans l'additionneur 41. Cette configuration correspond au codeur G_{1S}, expliqué en référence à la figure 3a, pour produire un signal de sortie G_{1S}.

Dans le codeur G₂, les bascules FF2, FF3, FF6, FF8, FF9 et FF10 ont chacune une sortie additionnée dans l'additionneur 42 de type EX-OR. La sortie de l'additionneur 42 est introduite à l'entrée de la première bascule 40 FF1 à travers le multiplexeur 47. En fonctionnement normal, la sortie de l'additionneur 42 passe librement (montré en pointillés sur la figure) à travers le multiplexeur 47 si aucune commande CS n'est imposée audit multiplexeur 47. Un second signal codé G₂ est ainsi produit à la sortie de la dernière bascule 40 FF10 du second codeur G₂ à chaque coup d'horloge PRN-CLK.

Les sorties des bascules FF2 à FF5 du codeur G₂ sont introduites dans l'additionneur 45 de type EX-OR dont la sortie est placée à l'entrée du multiplexeur 47. En phase de test, une commande CS est imposée au multiplexeur 47 afin que la sortie de l'additionneur 45 soit introduite à l'entrée de la première bascule FF1 à la place de la sortie de l'additionneur 42. Cette configuration correspond au codeur G_{2S}, expliqué en référence à la figure 3a, pour produire un signal de sortie G_{2S}.

Le sélecteur G₂ comprend notamment un additionneur 43 de type EX-OR qui additionne les signaux de sortie de deux bascules choisies parmi les dix bascules 40, par exemple des bascules 40 FF3 et FF7 du second codeur G₂, pour la production du code spécifique d'un satellite déterminé. L'addition par l'additionneur 43 du sélecteur G₂ génère également un certain retard ce qui est bien connu de l'homme du métier dans ce domaine technique.

La sortie de cet additionneur 43 passe librement (montré en pointillés sur la figure) à travers un multiplexeur 48 si aucune commande CS n'est imposée audit multiplexeur 48. Ainsi en fonctionnement normal, la sortie du sélecteur G₂ peut être additionnée avec la sortie G₁ dans un additionneur 44 de type EX-OR pour donner le signal de sortie G. Dans ce cas la sortie G définit la génération d'une réplique du code de Gold spécifique à un satellite déterminé.

En phase de test, une commande CS est imposée au multiplexeur 48 afin qu'uniquement les sorties G₁ et G₂ soient additionnées dans l'additionneur 44 afin de produire un signal qui correspond au signal G_{S} expliqué en référence à la figure 3a.

La figure 4 montre les différents éléments électroniques d'un corrélateur de l'étage de corrélation qui est bien connu d'un homme du métier dans ce domaine technique. Pour plus de détails relatifs aux divers éléments de ce corrélateur, le lecteur se reportera à l'enseignement tiré du livre « Understanding GPS Principles and Applications » au chapitre 5 rédigé par Phillip Ward et de l'éditeur Elliott D. Kaplan (Artech House Publishers, USA 1996) au numéro d'édition ISBN 0-89006-793-7, et notamment aux figures 5.8 et 5.13 qui représentent en grandes lignes tous les éléments de la figure 4. Il est à noter que sur la figure, les lignes représentées en gras avec une barre oblique définissent un certain nombre de bits en parallèle.

En phase de test, tous les corrélateurs des canaux de l'étage de corrélation sont configurés de la même manière pour le test représentatif de fonctionnement du circuit de corrélation et de démodulation. Par simplification dans la suite de la description, uniquement un des corrélateurs est décrit.

Le corrélateur comprend un mélangeur de porteuse 20, un mélangeur de code 21, des intégrateurs compteurs 22, des discriminateurs de code 23 et de porteuse 26, des oscillateurs à commande numérique du code 24 et de la porteuse 27, un générateur de code pseudo-aléatoire 25, et une table sin/cos 28 de la porteuse.

Tout d'abord, le mélangeur de porteuse 20 reçoit à l'entrée soit les signaux intermédiaires IF en fonctionnement normal, montrés par une ligne en pointillés, soit les signaux intermédiaires de test IFₜₑₛₜ en phase de test. Ces signaux intermédiaires sont des signaux complexes, c'est-à-dire qu'ils sont composés d'un signal en phase I et d'un signal en quadrature Q selon la formule (I + iQ). Le choix des signaux arrivant au mélangeur 20 est imposé par les moyens de commande du microprocesseur comme expliqué ci-devant. Ces signaux intermédiaires sont traités dans une boucle d'asservissement du code PRN et dans une boucle d'asservissement de la porteuse.

Dans le mélangeur 20, les signaux intermédiaires IFₜₑₛₜ sont multipliés d'une part par le Cosinus moins i fois le Sinus de la réplique de la porteuse générée en interne afin de tirer du signal intermédiaire complexe le signal en phase I, et d'autre part par le moins Sinus moins i fois le Cosinus de la réplique de la porteuse générée en interne afin de tirer des signaux intermédiaires complexes le signal en quadrature Q.

Après cette opération de corrélation de la porteuse, les signaux I et Q sont entrés dans un mélangeur de code 21 afin de trouver l'équivalence du code PRN avec celui généré en interne. Les signaux en phase I et en quadrature Q sont multipliés chacun d'une part par une réplique E en avance (du terme anglais « early ») du code PRN et d'autre part par une réplique L en retard (du terme anglais « late ») du code PRN pour donner quatre signaux de sorties I_{E}, I_{L}, Q_{E} et Q_{L}. Dans chaque canal de l'étage de corrélation, il n'a été gardé que les répliques en avance et en retard qui sont espacées d'un demi chip sans tenir compte de la réplique ponctuelle intermédiaire.

Les quatre signaux corrélés I_{E}, I_{L}, Q_{E} et Q_{L} sont entrés dans des intégrateurs compteurs 22 qui sont des éléments de pré-détection. Les quatre valeurs de sortie I_{ES}, I_{LS}, Q_{ES} et Q_{LS} des intégrateurs compteurs 22 sont représentés par 10 bits ce qui correspond à un cycle complet du code de Gold. Toutefois, uniquement 8 bits de poids fort de chaque valeur de sortie sont utilisés dans les boucles d'asservissement du code et de la porteuse.

En fonctionnement normal, un jeu complet de valeurs de sorties I_{ES}, I_{LS}, Q_{ES} et Q_{LS} est obtenu après chaque milliseconde ou chaque époque (epoch en anglais), car la longueur de répétition du code est de 1023 chips avec une fréquence d'horloge du code de 1,023 MHz. Par contre en phase de test avec une longueur de répétition du code réduit à 31 chips et une fréquence d'horloge du code à 408 kHz, un jeu complet de valeurs de sortie est obtenu après environ chaque 76 µs. Cette valeur de 76 µs correspond à la division de 31 par 408 kHz.

Pour fournir le jeu complet en fonctionnement normal ou en phase de test, les intégrateurs compteurs 22 débutent le comptage suivant le début ou la fin de chaque séquence du code. Ainsi, on peut estimer le gain de temps pour obtenir les valeurs de sortie qui correspond au rapport des temps d'intégration, c'est-à-dire (1 ms/76 µs), multiplié par le rapport des longueurs de répétition du code, c'est-à-dire 1023/31. Le gain de temps du test en boucle fermée du circuit de corrélation et de démodulation est d'environ 435 fois inférieur au temps de test réalisé si le code pseudo-aléatoire est de 1023 de longueur de répétition. Ce gain pourrait même être plus de 1000 fois inférieur si la fréquence d'horloge du code en phase de test était fixée à 1,023 MHz, car le temps d'intégration passerait de 76 µs à environ 31 µs.

Deux autres valeurs de sorties I_{PS} et Q_{PS} correspondant aux valeurs pseudo-ponctuelles sont obtenues par addition des deux signaux de sortie I_{ES} et I_{LS} pour la valeur I_{PS}, et des deux signaux Q_{ES} et Q_{LS} pour la valeur Q_{PS}.

Dans la boucle d'asservissement du code PRN, les quatre signaux de sortie I_{ES}, I_{LS}, Q_{ES} et Q_{LS} sont introduits dans un discriminateur de code 23 qui réalise les opérations de calcul de l'énergie desdits signaux de sortie. Une accumulation de valeur pendant un certain nombre de cycles d'intégration, par exemple 16 cycles, est réalisée dans le discriminateur de code 23. Ce discriminateur 23, qui comprend également un filtre, fournit un incrément de boucle de phase du code filtré à un oscillateur à commande numérique du code (NCO) 24. Cet incrément de boucle de phase permet d'ajuster la phase pour la génération de la réplique du code. Cet oscillateur 24 reçoit donc un mot binaire par exemple de 28 bits filtré du discriminateur 23.

Au début d'une procédure de recherche, un incrément de phase du code INCR-C est fourni par l'intermédiaire du microprocesseur et des registres d'entrée et de sortie des paramètres afin de fixer la valeur de départ de la fréquence d'horloge du code que doit fournir l'oscillateur 24. Bien entendu, la valeur de cet incrément INCR-C est différent si le circuit est en mode de fonctionnement normal ou en phase de test.

Le signal à fréquence d'horloge PRN-CLK est fourni au générateur de code PRN 25 pour cadencer la génération des répliques en avance et en retard du code pseudo-aléatoire. Si une commande CS est imposée au générateur de code 25, cela signifie que le générateur est configuré en phase de test pour générer une réplique du code de longueur de répétition valant 31. De même en phase de test, l'incrément INCR-C fourni à l'oscillateur à commande numérique 24 est tel que la fréquence d'horloge PRN-CLK en sortie de l'oscillateur vaut 408 kHz de préférence.

Dans la boucle d'asservissement de la porteuse, les signaux pseudo-ponctuels de sortie I_{PS} et Q_{PS} sont introduits dans le discriminateur de porteuse 26. Une accumulation de valeur pendant un certain nombre de cycles d'intégration, par exemple 16 cycles, est réalisée dans le discriminateur de porteuse 26. Ce discriminateur 26, qui comprend également un filtre, fournit un incrément de boucle de porteuse filtré à un oscillateur à commande numérique de porteuse (NCO) 27. Cet incrément de boucle de porteuse permet d'ajuster la fréquence pour la génération de la réplique de la porteuse. Cet oscillateur 27 reçoit donc un mot binaire par exemple de 24 bits filtré du discriminateur 26.

Comme pour la boucle d'asservissement du code au début d'une procédure de recherche, un incrément de fréquence INCR-P est introduit par l'intermédiaire notamment du microprocesseur. L'incrément de fréquence INCR-P permet de fixer initialement la fréquence porteuse générée par l'oscillateur 27 à une valeur comparable à la fréquence porteuse des signaux intermédiaires. Bien entendu, la valeur de cet incrément INCR-P est différent si le circuit est en mode de fonctionnement normal ou en phase de test.

Les signaux de sortie de l'oscillateur à commande numérique 27 sont fournis à une table sin/cos 28 afin que cette dernière donnent deux signaux complexes au mélangeur 20. Les signaux complexes (Cosx-iSinx) et (-Sinx-iCosx) sont multipliés dans le mélangeur 20 aux signaux intermédiaires complexes pour fournir un signal en phase I et un signal en quadrature Q.

Comme décrit ci-devant, le fait de choisir une longueur de répétition à 31 chips pour le code pseudo-aléatoire modulé sur les signaux intermédiaires de test permet, en phase de test du circuit, de tenir compte d'un bruit inhérent aux signaux radiofréquences à code de longueur de répétition de 1023 chips.

Les signaux intermédiaires IF traditionnels fournis à l'étage de corrélation comprennent du bruit qui est environ de 16 dB supérieur aux signaux utiles. Il faut donc tenir compte sur les signaux de sortie fournis par les intégrateurs compteurs 22 du rapport signal sur bruit (SNR) des signaux réels pour avoir des valeurs comparables avec des signaux intermédiaires de test qui sont sans bruit. Normalement, des signaux apparaissent en sortie ayant un SNR compris entre 15 et 20 dB lorsque la réplique du code est en phase avec le code des signaux intermédiaires de test.

Si un test de l'étage de corrélation était réalisé avec des signaux radiofréquences sans bruit produits à l'extérieur du récepteur, il y aurait un risque de saturation au niveau des intégrateurs compteurs 22. C'est pourquoi pour avoir un test représentatif de la fonctionnalité de l'étage de corrélation avec des signaux radiofréquences de test, il serait nécessaire d'ajouter du bruit auxdits signaux. Par contre avec les signaux intermédiaires de test de la présente invention, un bruit n'a pas besoin d'être ajouté, car aucune saturation dans l'accumulation de valeurs de sortie des intégrateurs compteurs n'est observée.

La puissance des signaux de sortie des intégrateurs selon les signaux radiofréquences reçus par le récepteur est donnée par la formule P_{S} = (C/N₀)Tσ² où (C/N₀)T, avec T valant 1 ms, représente le rapport du signal sur bruit (SNR) et σ² représente la puissance moyenne du bruit. Les signaux intermédiaires de test produisent donc des signaux de sortie des intégrateurs compteurs avec une puissance de sortie comparable à la puissance de sortie des signaux radiofréquences réels qui comprennent du bruit. Ceci permet donc d'opérer un test fonctionnel en boucle fermée proche de la réalité de l'étage de corrélation avec des signaux de test sans bruit à code pseudo-aléatoire réduit à 31.

A la fin de la phase de test, le message des signaux intermédiaires sont démodulés dans chaque canal en sortie des intégrateurs compteurs 22 afin de fournir les données au microprocesseur. En fonction du résultat du test et des données reçues, le microprocesseur peut contrôler la bonne fonctionnalité de chaque canal de l'étage de corrélation. Grâce à la réduction de la longueur de répétition du code pseudo-aléatoire, le temps de test est fortement réduit tout en garantissant un test en boucle fermée comparable à un test de fonctionnalité réel. Plus de 90% des éléments peuvent ainsi être testés dans ce mode de test en boucle fermée.

Cette opération de test en boucle fermée peut se répéter par périodes de temps déterminées, comme expliqué précédemment, en fonction d'une programmation des moyens à microprocesseur. Bien entendu, cette programmation est utile lorsque le récepteur avec le circuit de corrélation et de démodulation, qui comprend le générateur de signaux de test, est monté dans un objet portable alimenté par une pile ou un accumulateur. Cet objet portable peut bien évidemment être une montre ou un téléphone portable par exemple dans lesquels il est nécessaire d'économiser la consommation d'énergie même en phase de test.

Néanmoins, il est tout à fait envisageable de réaliser ce test avant que les opérations de montage du circuit de corrélation et de démodulation sur le récepteur n'aient eu lieu. Dans ce cas, le test en boucle fermée de l'étage de corrélation du circuit peut être réalisé sur un banc de test, voire en sortie de production des circuits sur plaquette.

Bien entendu d'autres formes de réalisation du circuit de corrélation et de démodulation peuvent être encore imaginées à la connaissance de l'homme du métier sans sortir du cadre de l'invention définie par les revendications. Le circuit configurable en mode de fonctionnement normal et en mode de test peut être utilisé dans tout récepteur de signaux modulés par un code de longueur de répétition déterminée. Les signaux intermédiaires de test peuvent être fournis par un générateur de signaux de test qui se trouvent par exemple sur le banc de test plutôt que ce générateur soit intégré dans le circuit. Toutefois, comme le générateur de signaux de test ne comprend qu'une quarantaine de portes logiques ou flip-flop, alors que le circuit compte près de 2 millions de transistors, cela ne représente qu'une infime place supplémentaire sur le circuit.

## Revendications

1. Circuit de corrélation et de démodulation (6) d'un récepteur (1) de signaux modulés par un premier code d'une longueur de répétition déterminée, ledit premier code définissant une source émettrice desdits signaux, ledit circuit comprenant un étage de corrélation (7) relié à des moyens de commande (12) notamment pour configurer ledit étage de corrélation en mode de fonctionnement normal ou en mode de test, en fonctionnement normal ledit étage étant destiné à recevoir des signaux intermédiaires (IF) correspondant aux signaux modulés mis en forme dans des moyens de réception (3) des signaux modulés du récepteur, lesdits signaux intermédiaires étant corrélés dans une boucle d'asservissement d'un corrélateur (8) dudit étage de corrélation (7) avec une réplique du premier code fournie par un générateur de code (25), **caractérisé en ce qu'**en phase de test, ledit générateur de code (25) est adapté par l'intermédiaire des moyens de commande (12) pour générer une réplique d'un second code de longueur de répétition inférieure au premier code pour des opérations de corrélation avec des signaux intermédiaires de test (IFₜₑₛₜ) modulés par le second code de longueur de répétition inférieure au premier code et fournis à l'étage de corrélation (7) de manière à opérer un test représentatif de fonctionnement en boucle fermée de l'étage de corrélation plus rapidement qu'avec des signaux modulés par le premier code.

2. Circuit de corrélation et de démodulation (6) selon la revendication 1, **caractérisé en ce qu'**il comprend un générateur de signaux de test (15) susceptible de fournir en phase de test les signaux intermédiaires de test (IFₜₑₛₜ) à l'étage de corrélation en lieu et place de signaux intermédiaires (IF) du récepteur, lesdits signaux de test étant modulés par le second code de longueur de répétition inférieure au premier code de manière à opérer un test représentatif de fonctionnement en boucle fermée de l'étage de corrélation (7).

3. Circuit de corrélation et de démodulation (6) selon la revendication 2 pour un récepteur (1) de signaux radiofréquences, le premier code étant un premier code pseudo-aléatoire différent pour chaque satellite émetteur, **caractérisé en ce que** le générateur de signaux de test (15) fournit en phase de test des signaux de test (IFₜₑₛₜ) modulés par un second code pseudo-aléatoire de longueur de répétition inférieure au premier code pseudo-aléatoire, et **en ce que** le générateur de code (25) est adapté par l'intermédiaire des moyens de commande (12) pour produire une réplique du second code pseudo-aléatoire pour les opérations de corrélation en phase de test avec les signaux de test.

4. Circuit de corrélation et de démodulation (6) selon la revendication 3 pour un récepteur (1) de type GPS, **caractérisé en ce que** les moyens de commande font partie de moyens à microprocesseur (12, 18) susceptible de calculer des données de position, de vitesse et temporelles, d'adapter des paramètres de boucle d'asservissement au début des opérations de corrélation et de contrôler le bon fonctionnement de l'étage de corrélation en phase de test.

5. Circuit de corrélation et de démodulation (6) selon l'une des revendications 3 et 4, **caractérisé en ce que** l'étage de corrélation (7) comprend plusieurs canaux (7') dont chacun est muni d'un corrélateur (8) pour permettre d'acquérir et de poursuivre plusieurs satellites visibles simultanément en fonctionnement normal, alors qu'en phase de test tous les canaux de l'étage de corrélation, dans lesquels chaque générateur de code (25) est adapté pour générer une même réplique du second code, reçoivent uniquement les signaux de test (IFₜₑₛₜ) du générateur de signaux de test (15) afin de contrôler simultanément le bon fonctionnement des opérations de corrélation de tous les canaux de l'étage de corrélation.

6. Circuit de corrélation et de démodulation (6) selon la revendication 4, **caractérisé en ce que** le microprocesseur (12) est programmé de telle manière à commander la phase de test de l'étage de corrélation (7) par périodes de temps prédéterminées.

7. Circuit de corrélation et de démodulation (6) selon l'une des revendications 3 à 6, **caractérisé en ce que** le générateur de signaux de test (15) produit, en phase de test, des signaux de test à fréquence porteuse modulés par le second code pseudo-aléatoire dont la longueur de répétition est déterminée de telle manière à tenir compte, dans des boucles d'asservissement relatives à la fréquence porteuse et au code pseudo-aléatoire de l'étage de corrélation, d'un bruit inhérent des signaux radiofréquences modulés par le premier code pseudo-aléatoire, afin d'avoir une puissance comparable sur des signaux de sortie d'éléments de pré-détection, tels que des intégrateurs compteurs (22).

8. Circuit de corrélation et de démodulation (6) selon la revendication 7, **caractérisé en ce que** les moyens à microprocesseur (12) définissent en collaboration avec le générateur de code (25) de chaque canal de l'étage de corrélation la durée d'intégration des éléments de pré-détection en fonction de la longueur de répétition du premier ou du second code pseudo-aléatoire.

9. Circuit de corrélation et de démodulation (6) selon l'une des revendications 3 et 7, **caractérisé en ce que** le générateur de signaux de test (15) comprend un générateur de second code pseudo-aléatoire, un premier oscillateur à commande numérique (151), tel qu'un oscillateur 8-bit, pour fournir des signaux d'horloge (PRN-CLKs) au générateur du second code pseudo-aléatoire (152) sur la base d'un premier mot binaire fourni par les moyens à microprocesseur, un second oscillateur à commande numérique (153), tel qu'un oscillateur 8-bit, pour générer des signaux à fréquence porteuse sur la base d'un second mot binaire fourni par les moyens à microprocesseur, le second code pseudo-aléatoire étant modulé sur lesdits signaux à fréquence porteuse, et un générateur de message (154) dont les signaux de message sont également modulés sur les signaux à fréquence porteuse, l'étage de corrélation (7) étant destiné à fournir les données de message de test aux moyens à microprocesseur pour le contrôle en phase de test du fonctionnement en boucle fermée de l'étage de corrélation.

10. Circuit de corrélation et de démodulation (6) selon l'une des revendications 7 et 9, **caractérisé en ce que** le second code pseudo-aléatoire réduit est de longueur de répétition égale à 31, alors que le premier code pseudo-aléatoire des signaux radiofréquences est de longueur de répétition égale à 1023 permettant de fournir en sortie des éléments de pré-détection (22) de l'étage de corrélation des signaux (I_{ES}, I_{LS}, Q_{ES}, Q_{LS}) comparables en tenant compte d'un bruit inhérent aux signaux radiofréquences.

11. Circuit de corrélation et de démodulation (6) selon l'une des revendications 3 à 5, **caractérisé en ce que** l'étage de corrélation (7) comprend, pour chaque canal (7'), un contrôleur (9) relié au corrélateur (8) pour mettre en oeuvre un algorithme de traitement des signaux numériques dans toutes les tâches de synchronisation afin d'ajuster notamment des paramètres de phase et/ou de fréquence pour le générateur de code (25) dans un mode de fonctionnement normal ou dans un mode de test.

12. Circuit de corrélation et de démodulation (6) selon la revendication 5, **caractérisé en ce que** le corrélateur (8) de chaque canal de l'étage de corrélation (7) comprend des moyens de génération (27, 28) d'une réplique de signaux à fréquence porteuse pouvant être adapté par les moyens à microprocesseur (12) dans un mode de fonctionnement normal ou un mode de test, en fonction de la fréquence porteuse des signaux intermédiaires fournis au corrélateur.

13. Circuit de corrélation et de démodulation (6) selon l'une des revendications précédentes, **caractérisé en ce que** tous les éléments dudit circuit sont réalisés sur un unique substrat semi-conducteur, tel qu'un substrat en silicium.

## Patentansprüche

1. Korrelations- und Demodulationsschaltung (6) eines Empfängers (1) für Signale, die mit einem ersten Code mit einer gegebenen Wiederholungslänge moduliert sind, wobei der erste Code eine Sendequelle der Signale definiert, wobei die Schaltung eine Korrelationsstufe (7) umfasst, die mit Steuermitteln (12) insbesondere für die Konfiguration der Korrelationsstufe in der normalen Betriebsart oder In der Testbetriebsart verbunden ist und im Normalbetrieb dazu bestimmt ist, Zwischensignale (IF) zu empfangen, die den modulierten Signalen entsprechen, die in den Empfangsmitteln (3) für die modulierten Signale des Empfängers geformt worden sind, wobei die Zwischensignale in einer Regelungsschleife eines Korrelators (8) der Korrelationsstufe (7) mit einer Kopie des von einem Code-Generator (25) gelieferten ersten Codes korreliert werden, **dadurch gekennzeichnet, dass** der Code-Generator (25) in der Testphase über Steuermittel (12) so angepasst wird, dass er eine Kopie eines zweiten Codes mit einer Wiederholungslänge, die kleiner als jene des ersten Codes ist, für Korrelationsoperationen mit Test-Zwischensignalen (IFₜₑₛₜ), die durch den zweiten Code mit einer Wiederholungslänge, die kleiner als jene des ersten Codes ist, moduliert und zur Korrelationsstufe (7) geliefert werden, erzeugt, in der Weise, um einen Test, der den Betrieb mit geschlossener Schleife der Korrelationsstufe repräsentiert, schneller durchzuführen als mit mit dem ersten Code modulierten Signalen.

2. Korrelations- und Demodulationsschaltung (6) nach Anspruch 1, **dadurch gekennzeichnet, dass** sie einen Testsignalgenerator (15) umfasst, der in der Testphase statt der Zwischensignale (IF) des Empfängers die Test-Zwischensignale (IFₜₑₛₜ) zur Korrelationsstufe liefem kann, wobei die Testsignale durch den zweiten Code mit einer Wiederholungslänge, die kleiner als jene des ersten Codes ist, moduliert sind, derart, dass ein Test ausgeführt wird, der den Betrieb mit geschlossener Schleife der Korrelationsstufe (7) repräsentiert.

3. Korrelations- und Demodulationsschaltung (6) nach Anspruch 2, für einen Empfänger (1) von Hochfrequenzsignalen, wobei der erste Code ein erster Pseudozufallscode ist, der für jeden Sender-Satelliten verschieden ist, **dadurch gekennzeichnet, dass** der Testsignalgenerator (15) in der Testphase Testsignale (IFₜₑₛₜ₎ liefert, die durch einen zweiten Pseudozufallscode mit einer Wiederholungslänge, die kleiner als jene des ersten Fseudozufallscode ist, moduliert sind, und dass der Codegenerator (25) so beschaffen ist, dass er über Steuermittel (12) eine Kopie des zweiten Pseudozufallscodes für die Korrelationsoperationen in der Testphase mit den Testsignalen erzeugen kann.

4. Korrelations- und Demodulationsschaltung (6) nach Anspruch 3 für einen Empfänger (1) des GPS-Typs, **dadurch gekennzeichnet, dass** die Steuermittel einen Teil von Mikroprozessormitteln (12, 18) bilden, die Positions-, Geschwindigkeits- und Zeitdaten berechnen können, Parameter der Regelungsschleife am Anfang der Korrelationsoperationen anpassen können und den korrekten Betrieb der Korrelationsstufe in der Testphase steuern können.

5. Korrelafions- und Demodulationsschaltung (6) nach einem der Ansprüche 3 und 4, **dadurch gekennzeichnet, dass** die Korrelationsstufe (7) mehrere Kanäle (7') umfasst, wovon jeder mit einem Korrelator (8) versehen ist, um im Normalbetrieb mehrere gleichzeitig sichtbare Satelliten erfassen und verfolgen zu können, während in der Testphase alle Kanäle der Karralaftonsstufe, in denen jeder Codegenerator (25) dieselbe Kopie des zweiten Codes erzeugen kann, ausschließlich die Testsignale (IFₜₑₛₜ) des Testsignalgenerators (15) empfangen, um gleichzeitig den korrekten Betrieb der Korrelationsoperationen aller Kanäle der Korrelationsstufe zu steuern.

6. Korrelations- und Demodulationsschaltung (6) nach Anspruch 4, **dadurch gekennzeichnet, dass** der Mikroprozessor (12) in der Weise programmiert ist, dass er die Testphase der Korrelationsstufe (7) in vorgegebenen Zeitperioden steuert.

7. Korrelations- und Demodulationsschaltung (6) nach einem der Ansprüche 3 bis 6, **dadurch gekennzeichnet, dass** der Testsignalgenerator (15) in der Testphase Testsignale mit einer Trägerfrequenz, die durch den zweiten Pseudozufallscode moduliert sind, dessen Wiederholungslänge in der Weise bestimmt ist, dass in den auf die Trägerfrequenz und auf den Pseudozufallscode der Korrelationsstufe bezogenen Regelungsschleifen ein inhärentes Rauschen der durch den ersten Pseudozufallscode modulierten Hochfrequenzsignale berücksichtigt wird, erzeugt, um eine vergleichbare Leistung in den Ausgangssignalen von Vorerfassungselementen wie etwa von Integratoren/Zählern (22) zu haben.

8. Korrelations- und Demodulationsschaltung (6) nach Anspruch 7, **dadurch gekennzeichnet, dass** die Mikroprozessormittel (12) in Zusammenwirkung mit dem Codegenerator (25) jedes Kanals der Korrelationsstufe die Integrationsdauer der Vorerfassungselemente in Abhängigkeit von der Wiederholungslänge des ersten oder des zweiten Pseudozufallscodes definieren.

9. Korrelations- und Demodulationsschaltung (6) nach einem der Ansprüche 3 und 7, **dadurch gekennzeichnet, dass** der Testsignalgenerator (15) einen Generator für den zweiten Pseudozufallscode, einen ersten Oszillator mit digitaler Steuerung (151) wie etwa einen 8-Bit-Oszillator, um Taktsignale (PRN-CLKs) zu dem Generator für den zweiten Pseudozufallscode (152) anhand eines von den Mikroprozessormitteln gelieferten ersten binären Wortes zu liefern, einen zweiten Oszillator mit digitaler Steuerung (153) wie etwa einen 8-Bit-Oszillator, um Trägerfrequenzsignale anhand eines von den Mikroprozessormitteln gelieferten zweiten binären Wortes zu erzeugen, wobei der zweite Pseudozufallscode auf die Trägerfrequenzsignale moduliert wird, und einen Nachrichtengenerator (154), dessen Nachrichtensignale ebenfalls auf die Trägerfrequenzsignale moduliert sind, umfasst, wobei die Korrelationsstufe (7) dazu bestimmt ist, die Testnachrichtendaten zu den Mikroprozessormitteln zu liefern, um die Testphase des Betriebs mit geschlossener Schleife der Korrelationsstufe zu steuern.

10. Korrelations- und Demodulationsschaltung (6) nach einem der Ansprüche 7 und 9, **dadurch gekennzeichnet, dass** der reduzierte zweite Pseudozufällscode eine Wiederholungslänge von 31 besitzt, während der erste Pseudozufallscode von Hochfrequenzsignalen eine Wiederholungslänge von 1023 besitzt, die ermöglicht, am Ausgang der Vorerfassungselemente (22) der Korrelationsstufe Signale (I_{ES}, I_{LS}, Q_{ES}, Q_{LS}) zu liefern, die unter Berücksichtigung eines inhärenten Rauschens mit den Hochfrequenzsignalen vergleichbar sind.

11. Korrelations- und Demodulationsschaltung (6) nach einem der Ansprüche 3 bis 5, **dadurch gekennzeichnet, dass** die Korrelationsstufe (7) für jeden Kanal (7') eine Steuereinheit (9) umfasst, die mit dem Korrelator (8) verbunden ist, um einen Verarbeitungsalgorithmus für digitale Signale in allen Synchronisationsaufgaben auszuführen, um insbesondere die Phasen- und/oder Frequenzparameter für den Codegenerator (25) in einer normalen Betriebsart oder in einer Testbetriebsart einzustellen.

12. Korrelations- und Demodulationsschaltung (6) nach Anspruch 5, **dadurch gekennzeichnet, dass** der Korrelator (8) jedes Kanals der Korrelationsstufe (7) Mittel (27, 28) für die Erzeugung einer Kopie von Trägerfrequenzsignalen umfasst, die durch die Mikroprozessormittel (12) in einer normalen Betriebsart oder in einer Testbetriebsart in Abhängigkeit von der Trägerfrequenz der zu dem Korrelator gelieferten Zwischensignale angepasst werden können.

13. Korrelations- und Demodulationsschaltung (6) nach einem der vorhergehenden Ansprüche, **dadurch gekennzeichnet, dass** alle Elemente der Schaltung auf einem einzigen Halbleitersubstrat wie etwa einem Siliciumsubstrat verwirklicht sind.

## Claims

1. Correlation and demodulation circuit (6) for a receiver (1) for signals modulated by a first code of a determined repetition length, said first code defining a source transmitting said signals, said circuit including a correlation stage (7) connected to control means (12) in particular for configuring said correlation stage in normal operating mode or in test mode, in normal operation said stage being intended to receive intermediate signals (IF) corresponding to the modulated signals shaped in receiver modulated signal receiving means (3), said intermediate signals being correlated in a correlator control loop (8) of said correlation stage (7) with a replica of the first code supplied by a code generator (25), **characterised in that** in test phase, said code generator (25) is adapted via control means (12) to generate a replica of a second repetition code shorter than the first code for correlation operations with intermediate test signals (IFₜₑₛₜ) modulated by the second code of shorter repetition length than the first code and supplied to the correlation stage (7) so as to perform a test representative of the correlation stage in closed loop operation more quickly than with signals modulated by the first code.

2. Correlation and demodulation circuit (6) according to claim 1, **characterised in that** it includes a test signal generator (15) capable of supplying, in test phase, the intermediate test signals (IFₜₑₛₜ) to the correlation stage instead of intermediate signals (IF) from the receiver, said test signals being modulated by the second code of shorter repetition length than the first code so as to perform a test representative of the correlation stage (7) in dosed loop operation.

3. Correlation and demodulation circuit (6) according to claim 2, for a radio-frequency signal receiver (1), the first code being a first pseudo-random code which is different for each transmitting satellite, **characterised in that** the test signal generator (15) supplies, in test phase, test signals (IFₜₑₛₜ) modulated by a second pseudo-random code of shorter repetition length than the first pseudo-random code, and **in that** the code generator (25) is adapted via control means (12) to generate a replica of the second pseudo-random code for the correlating operations with the test signals in test phase.

4. Correlation and demodulation circuit (6) according to daim 3 for a GPS type receiver (1), **characterised in that** the control means form part of microprocessor means (12, 18) capable of calculating position, speed and time data, adapting control loop parameters at the beginning of the correlation operations and checking that the correlation stage works properly in test phase.

5. Correlation and demodulation circuit (6) according to any of claims 3 and 4, **characterised in that** the correlation stage (7) includes several channels (7') each of which is provided with a correlator (8) to allow several visible satellites to be acquired and tracked simultaneously in normal operation, whereas in test phase all the correlation stage channels, in which each code generator (25) is adapted to generate the same second code replica, receive only the test signals (IFₜₑₛₜ) from the test signal generator (15) in order to check simultaneously that the correlating operations of all the correlation stage channels are working property.

6. Correlation and demodulation circuit (6) according to claim 4, **characterised in that** the microprocessor (12) is programmed so as to command the test phase of the correlation stage (7) at predetermined periods of time.

7. Correlation and demodulation circuit (6) according to any of claims 3 to 6, **characterised in that** the test signal generator (15) generates, in test phase, carrier frequency test signals modulated by the second pseudo-random code whose repetition length is determined so as to take into account, in control loops relating to the carrier frequency and to the pseudo-random code of the correlation stage, of inherent noise in the radio-frequency signals modulated by the first pseudo-random code, in order to have a comparable power with the output signals from pre-detection elements, such as integrator counters (22).

8. Correlation and demodulation circuit (6) according to claim 7, **characterised in that** the microprocessor means (12) define, in collaboration with the code generator (25) of each channel of the correlation stage, the pre-detection element integration duration as a function of the repetition length of the first or second pseudo-random code.

9. Correlation and demodulation circuit (6) according to any of claims 3 and 7, **characterised in that** the test signal generator (15) includes a second pseudo-random code generator, a first numerically controlled oscillator (151), such as an 8-bit oscillator, for supplying clock signals (PRN-CLKs) to the second pseudo-random code generator (152) on the basis of a first binary word provided by the microprocessor means, a second numerically controlled oscillator (153), such as an 8-bit oscillator, for generating carrier frequency signals on the basis of a second binary word provided by the microprocessor means, the second pseudo-random code being modulated on said carrier frequency signals, and a message generator (154) whose message signals are also modulated on the carrier frequency signals, the correlation stage (7) being intended to supply test message data to the microprocessor means for the closed loop operating test phase check of the correlation stage.

10. Correlation and demodulation circuit (6) according to any of claims 7 and 9, **characterised in that** the reduced second pseudo-random code has a repetition length equal to 31, whereas the first pseudo-random code of the radio-frequency signals has a repetition length equal to 1023 allowing the supply, at one output of the correlation stage pre-detection elements (22), comparable signals (I_{ES}, I_{LS}, Q_{ES}, Q_{LS}) taking account of inherent noise in the radio-frequency signals.

11. Correlation and demodulation circuit (6) according to any of claims 3 to 5, **characterised in that** the correlation stage (7) includes, for each channel (7'), a controller (9) connected to the correlator (8) for implementing an algorithm for processing the digital signals in all the synchronisation tasks in order to adjust in particular phase and/or frequency parameters for the code generator (25) in a normal operating mode or in a test mode.

12. Correlation and demodulation circuit (6) according to claim 5, **characterised in that** the correlator (8) of each channel of the correlation stage (7) includes means (27, 28) for generating a replica of carrier frequency signals able to be adapted by the microprocessor means (12) in a normal operating mode or in a test mode, as a function of the carrier frequency of the intermediate signals supplied to the correlator.

13. Correlation and demodulation circuit (6) according to any of the preceding claims, **characterised in that** all the elements of said circuit are made on a single semiconductor substrate, such as a silicon substrate.
